# EUROPEAN PATENT APPLICATION

(11) **EP 2 353 765 A1**
(43) Date of publication of application: **10.08.2011**
(21) Application number: 10151751.4
(22) Date of filing: 27.01.2010
(51) Int. Cl.: B23K 9/133, B65D 3/30, B65D 5/42, B65D 5/44, B65D 85/04, B65H 49/02

(54) **Container for welding wire with reinforcing strips in its peripheral wall**

(71) Applicant: Oerlikon Schweisstechnik GmbH, 67304 Eisenberg/Pfalz (DE)
(72) Inventor: Edelmann, Rolf, 67304 Eisenberg/Pfalz (DE); Zoller, Steffen, 67304 Eisenberg/Pfalz (DE)
(74) Representative: Pittis, Olivier

(57) **Abstract**

The invention concerns a container (1) comprising a peripheral wall (2) of cardboard material defining an internal volume (4) containing a welding wire spool (3), wherein the peripheral wall (2) is made of cardboard material reinforced by at least one reinforcing strip (5,6,7), preferably from 2 to 15 reinforcement strips. The peripheral wall (2) of the container (1) is made of a plurality of superposed layers of a cardboard material, the strips (5,6,7) being arranged between and integral with at least two of said layers. Preferably, the reinforcing strips (5,6,7) are made of polymer material. The container (1) of the invention can be used in any arc welding process, wherein an electric arc torch is fed with a welding wire (13) that is withdrawn from a welding wire container (1) according to the present invention.

## Description

The present invention concerns a container or a drum for packaging, storing, transporting and unwinding a coil or spool of welding wire, and the use of such a container in a welding operation, preferably an electric arc welding process, such as a MIG/MAG or submerged arc welding process.

Welding wire spools used for automatic or robotic welding are generally packed, stored and transported in containers made of cardboard material.

The welding wire containers can have different shapes, such as polygonal boxes or cylindrical drums.

Most of the time, the container further comprises an internal mobile retainer or cover that is arranged on the top of the welding wire coil for maintaining the wire spirals during its unwinding thereby avoiding or limiting the formation of twists and nodes in the wire, which are a known problem in this area.

For example, EP-A-519424 discloses a cylindrical drum made of cardboard with a retainer device placed on the top of the coil and having an outer periphery matching the diameter of the inner wall of the container and an inner bell-mouthed portion defining a wire extraction opening.

EP-A-636098 teaches to use of a square box, typically made of cardboard, with an internal flat cover arranged on the wire coil.

EP-A-1053189 discloses a polygonal box-like body that is made of cardboard, for accommodating a circular coil of wire during the transportation and the unwinding of the coil and comprising a retainer device arranged inside the body for preventing accidental entanglement of the wire during its unwinding.

Further, EP-A-1693139, EP-A-1693140 and EP-A-1357059 also teach drums that can be made of cardboard material.

Cardboard is the preferred material for manufacturing the box body as it is not expensive and is further easy to recycle after use.

However, a problem is that wire spools or coils are generally very heavy as their weights can reach 1000 kg, and hence the peripheral wall of the container can be damaged or broken upon the pressure exerted by the spool on it, in particular during transportation or handling operations.

So far, for improving the mechanical resistance of the container's peripheral wall, it has been proposed to use thicker cardboard material or to insert inside the container, i.e. between the box wall and the spool, a metallic or plastic corsets or similar devices.

If such solutions work, they are only rarely used as they notably increase the cost of the container as well as its overall weight, and they also lead to problems of waste disposal as these materials are not always very easy to recycle.

Hence, the problem is to provide a cardboard container for welding wire spools that overcomes at least part of the above problems. In particular, the container should not comprise any internal corsets or additional walls or structures that would increase its weight compared to a cardboard container of the prior art.

The solution of the present invention is a container comprising a peripheral wall of cardboard material defining an internal volume containing a welding wire spool, characterized in that the peripheral wall is made of cardboard material reinforced by at least one reinforcing strip.

Depending on the embodiment, the container of the present invention can comprise one or several of the following features :
- the peripheral wall is reinforced by at least 2 reinforcing strips.
- the peripheral wall is reinforced by 2 to 15 reinforcing strips, preferably 3 to 10 reinforcing strips.
- the strips are made of polymer material.
- the peripheral wall comprises at least two superposed layers of a cardboard material, the strips being arranged between and integral with said cardboard layers.
- the strips are glued between said cardboard layers.
- the strips are made of plastic.
- the reinforcement strips are continuous around the periphery of the peripheral wall.
- it comprises at least two strips arranged so as to be parallel to each other.
- that the main body formed by the peripheral wall has a polygonal or a cylindrical shape, comprises a bottom and a cover, and further comprises an internal retainer that is positioned on the wire spool and is axially mobile in said spool, said retainer having a disk-like structure comprising a central aperture for withdrawing the welding wire, and said retainer exerting a contact pressure on said spool for maintaining the spirals of the spool.

The present invention will be better understood with regard to the following description of an embodiment of the container of the present invention, made in references to the accompanying figures among which:
- Figure 1 is a schematic side view (in cross section) of a container according to the invention,
- Figure 2 is an enlarged schematic view of the wall of the container of Fig. 1, and
- Figure 3 is a side view of a first embodiment of a wire container according to the present invention,
- Figure 4 is a side view of a second embodiment of a wire container according to the present invention and
- Figures 5-7 representing different shapes of strips.

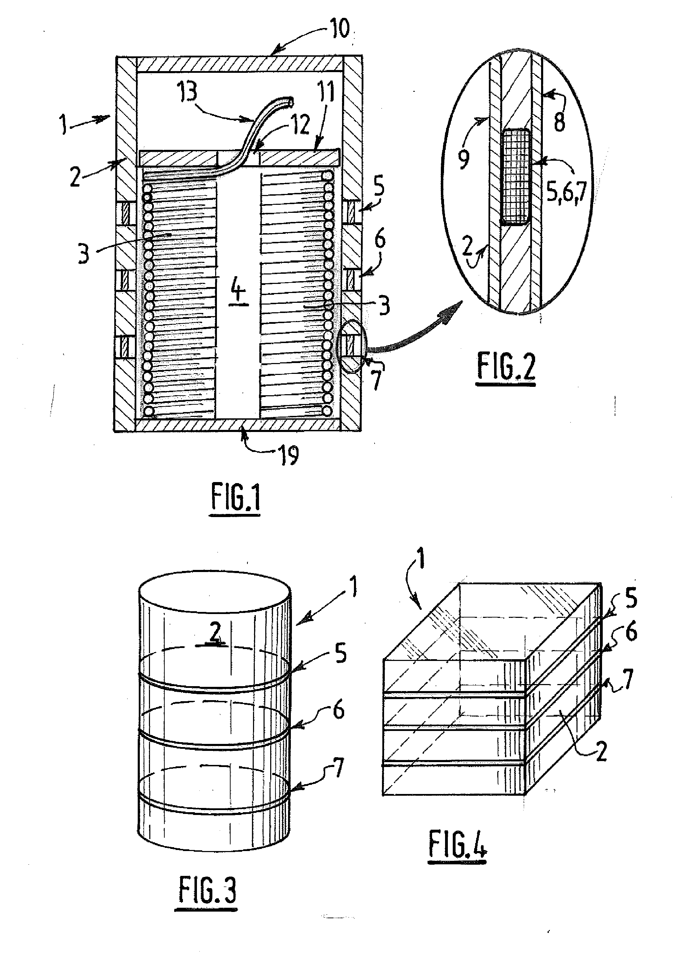

The present invention concerns a container 1 for packaging a coil or a spool 3 of welding wire having a weight up to about 1000 kg, as shown in Figure 1, comprising an internal retainer 11 for maintaining the spirals of the welding wire during its unwinding.

The container 1 comprises a hollow body having a peripheral wall 2 made of one or several panels, forming a circular (cf. Figure 3) or polygonal box-like structure, such as a square, hexagonal or octagonal box (cf. Figure 4). The container 1 further comprises a bottom 19 and a top 10, such a removable cover.

The container body can be arranged on a pallet (not shown).

The body formed by the peripheral wall 2 is made of cardboard material, whereas the bottom 19 and the top 10 are made of cardboard material, of plastic material or a combination thereof.

A circular coil or spool 3 of welding wire 13 is inserted in the hollow body, i.e. the internal volume 4 delimited by the peripheral wall 2, and lies on the bottom 19 of the container. The welding wire can be a flux cored wire or a metal cored wire.

The hollow body of the retainer 1 has a diameter that is slightly greater than the outer diameter of the retainer 11. Said retainer 11 is formed by a flat ring or disk, preferably made of cardboard, having a central orifice 12 for passing the wire 13.

The circular coil 3 of welding wire is inserted into the internal volume 4 of the hollow body 1 and is retained therein by the retainer 11 that is arranged on the top of the welding wire coil 3 in order to maintain the wire spirals during the transportation of the container and the unwinding of the coil for preventing accidental entanglement of the wire turn during the unwinding of the wire.

The shape or contour of the retainer 11 is preferably adapted to the inner contour of the peripheral wall 2, for example can match the inner wall of the container 1.

During operation, the wire 13 passes through the central orifice 12 arranged at the centre of the retainer 11 and is subsequently sent to an arc welding torch, such as a MIG, a MAG, a TIG or a SAW welding torch, preferably arranged on a robotic arm.

Further, the dimensions and weight of the retainer 11 should be carefully chosen so as to provide a constant and continuous feeding of the wire 13 at nearly constant drawing force and further so that the spooled wire 13 is prevented from entangling and forming loops and nodes.

According to the present invention, in order to avoid or limit the damages due to the forces exerted by the spool 3 against the internal surface of the peripheral wall 2 of the container 1, that can occur during transportation and handling of the container, said peripheral wall 2 is made of a particular cardboard, i.e. a cardboard that is reinforced by one or several strips 5, 6, 7 of a resistant material, such as strips made of polymer, e.g. plastic, as illustrated in Figure 1.

As shown in Figures 3 and 4, the strips 5, 6, 7 form elongated lines that are arranged all around the peripheral wall 2. In the embodiment of Figure 3, the strips 5, 6, 7 have a circular shape, i.e. form circles, as the container 1 is cylindrical, whereas in the embodiment of Figure 4, the strips have a square shape as the container 1 is also square.

When several reinforcement strips 5, 6, 7 are used, they are preferably arranged parallel to each others, and spaced of equal or different distances. The number of strips is typically of between 2 and 15, preferably of between 3 and 10, for example 3, 4 or 5 strips.

As a consequence, the length of each strip is approximately equal to the perimeter of the container 1.

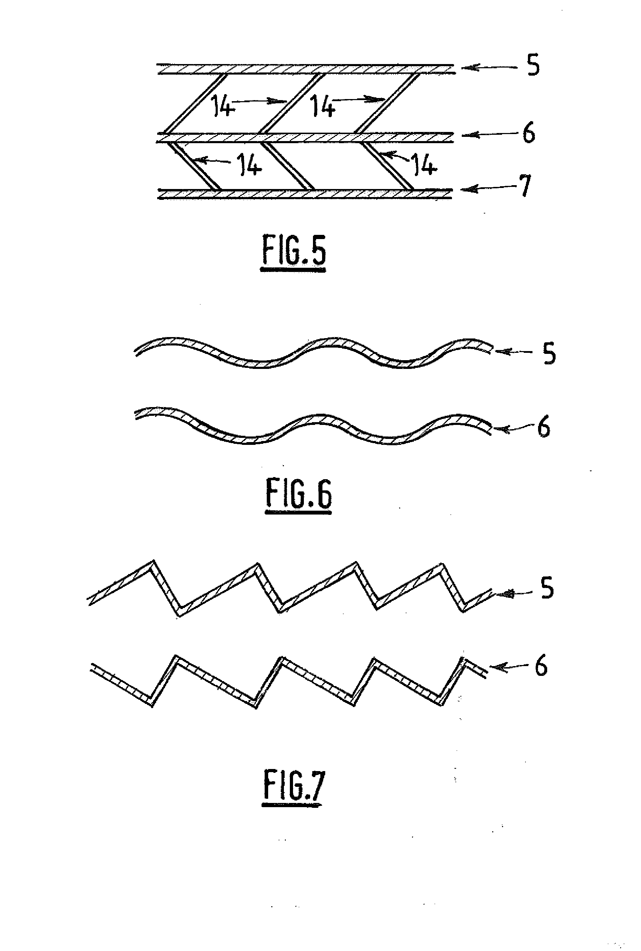

The strips 5, 6, 7 can be independent linear lines as shown in Figures 3 and 4, but can also have other shapes, for example be linked together by linking elements 14 as shown in Figure 5, and not be linear as shown in Figures 6 and 7 representing strips 5, 6 having a wave shape (Fig. 6) or a triangular-shape (Fig. 7).

As shown in Figure 2, the peripheral wall 2 of the container 1 comprises at least two superposed layers 8, 9 of a cardboard material and the strips 5, 6, 7 are glued between said cardboard layers 8, 9.

Using such strips improves the strength of the container's 1 wall 2, even when said wall 2 has a thin thickness and is not built of heavy and thick cardboard. The container 1 thus obtained is resistant, stable and light, and can be filled with up to 1000 kg of welding wire.

Further, such a container is environment friendly as it can be easily recycled as "normal" cardboard.

The container of the present invention can be used in any arc welding process for arc welding one or several metal pieces, wherein an electric arc torch is fed with a welding wire that is withdrawn from a welding wire container according to the present invention. For example, the welding torch is a MIG, MAG or TIG-type torch. Preferably, the torch is arranged on a robotic arm and the piece or pieces to be welded are elements or parts of automotive vehicles.

## Claims

1. Container (1) comprising a peripheral wall (2) of cardboard material defining an internal volume (4) containing a welding wire spool (3), **characterized in that** the peripheral wall (2) is made of cardboard material reinforced by at least one reinforcing strip (5, 6, 7).

2. Container according to the preceding claim, **characterized in that** the peripheral wall (2) is reinforced by at least 2 reinforcing strips (5, 6, 7).

3. Container according any one of the preceding claims, **characterized in** the peripheral wall (2) is reinforced by 2 to 15 reinforcing strips (5, 6, 7), preferably 3 to 10 reinforcing strips (5, 6, 7).

4. Container according any one of the preceding claims, **characterized in that** the strips (5, 6, 7) are made of polymer material.

5. Container according any one of the preceding claims, **characterized in that** the peripheral wall (2) comprises at least two superposed layers (8, 9) of a cardboard material, the strips (5, 6, 7) being arranged between and integral with said cardboard layers (8, 9).

6. Container according any one of the preceding claims, **characterized in that** the strips (5, 6, 7) are glued between said cardboard layers (8, 9).

7. Container according any one of the preceding claims, **characterized in that** the strips (5, 6, 7) are made of plastic.

8. Container according any one of the preceding claims, **characterized in that** the reinforcement strips (5, 6, 7) are continuous around the periphery of the peripheral wall (2).

9. Container according any one of the preceding claims, **characterized in that** it comprises at least two strips (5, 6, 7) arranged so as to be parallel to each other.

10. Container according any one of the preceding claims, **characterized in that** the main body formed by the peripheral wall (2):
- has a polygonal or a cylindrical shape,
- comprises a bottom (19) and a cover (10), and
- further comprises an internal retainer (11) that is positioned on the wire spool (3) and is axially mobile in said spool (3), said retainer having a disk-like structure comprising a central aperture (12) for withdrawing the welding wire (13), and said retainer (11) exerting a contact pressure on said spool (3) for maintaining the spirals of the spool (3).

## Amended claims

### Amended claims in accordance with Rule 137(2) EPC.

**1.** Use of a container (1) comprising a main body formed by a peripheral wall (2) of cardboard material defining an internal volume (4), said main body having a polygonal or a cylindrical shape and further comprising a bottom (19) and a cover (10), said peripheral wall (2) being reinforced by at least 2 reinforcing strips (5, 6, 7) made of polymer material, said at least 2 strips (5, 6, 7) being arranged between at least two superposed layers (8, 9) of a cardboard material forming said peripheral wall (2) and being integral with said cardboard layers (8, 9), for storing a spool of a welding wire (3), said welding wire spool (3) being arranged in said internal volume (4) and laying on the bottom (19), said container (1) being arranged on a pallet and further comprising an internal retainer (11) being positioned on the wire spool (3) and being axially mobile in said internal volume (4), said retainer having a disk-like structure comprising a central aperture (12) for withdrawing the welding wire (13), and said retainer (11) exerting a contact pressure on the spool (3) for maintaining the spirals of the spool (3).

**2.** Use according to the preceding claim, **characterized in** the peripheral wall (2) of the container is reinforced by 2 to 15 reinforcing strips (5, 6, 7), preferably 3 to 10 reinforcing strips (5, 6, 7).

**3.** Use according to any one of the preceding claims, **characterized in that** the strips (5, 6, 7) are glued between said cardboard layers (8, 9).

**4.** Use according any one of the preceding claims, **characterized in that** the strips (5, 6, 7) are made of plastic.

**5.** Use according to any one of the preceding claims, **characterized in that** the reinforcement strips (5, 6, 7) are continuous around the periphery of the peripheral wall (2).

**6.** Use according to any one of the preceding claims, **characterized in that** it comprises at least two strips (5, 6, 7) arranged so as to be parallel to each other.

**7.** Use according any one of the preceding claims, **characterized in that** the main body formed by the peripheral wall (2) has a polygonal or a cylindrical shape, comprises a bottom (19) and a cover (10), and further comprises an internal retainer (11) that is positioned on the wire spool (3) and is axially mobile in said spool (3), said retainer having a disk-like structure comprising a central aperture (12) for withdrawing the welding wire (13), and said retainer (11) exerting a contact pressure on said spool (3) for maintaining the spirals of the spool (3).
